# EUROPÄISCHE PATENTSCHRIFT

(11) **EP 3 735 522 B1**
(45) Veröffentlichungstag und Bekanntmachung des Hinweises auf die Patenterteilung: **14.06.2023**
(21) Anmeldenummer: 18829274.2
(22) Anmeldetag: 13.12.2018
(51) Int. Cl.: F01N 3/20, F16L 25/01, F16L 53/38

(54) **LEITUNGSSYSTEM ZUM TRANSPORT VON WÄSSRIGEN REDUKTIONSMITTELN FÜR DIE ABGASNACHBEHANDLUNG**
TUBE SYSTEM FOR THE TRANSPORTATION OF AQUEOUS REDUCING AGENTS FOR THE AFTERTREATMENT OF EXHAUST GAS
SYSTÈME DE CONDUIT POUR LE TRANSPORT D'UN AGENT RÉDUCTEUR AQUEUX POUR LE TRAITEMENT DE GAZ D'ÉCHAPPEMENT

(30) Priorität: 02.01.2018 DE 102018100006
(43) Veröffentlichungstag der Anmeldung: 11.11.2020
(73) Patentinhaber: Voss Automotive GmbH, 51688 Wipperfürth (DE)
(72) Erfinder: SCHWARZKOPF, Otfried, 51515 Kürten (DE); ETSCHEID, Tobias, 51789 Lindlar (DE); PLIETSCH, Reinhard, 42929 Wermelskirchen (DE)
(74) Vertreter: Dr. Solf & Zapf Patent- und Rechtsanwalts PartG mbB
(86) Internationale Anmeldenummer: PCT/EP2018/084810
(87) Internationale Veröffentlichungsnummer: WO 2019/134803

(56) Entgegenhaltungen:
- EP-A1- 3 431 855
- DE-A1-102013 016 855
- DE-U1-202007 018 089
- US-A1- 2016 160 725

## Beschreibung

Die vorliegende Erfindung betrifft ein Leitungssystem für eine Abgasnachbehandlung nach dem Oberbegriff des Anspruchs 1. Weiterhin betrifft die Erfindung ein Verfahren zur Steuerung eines derartigen Leitungssystems.

Ein derartiges Leitungssystem ist aus der DE 10 2013 016 855 A1 bekannt. Dieses Leitungssystem weist für die vorhandenen Heizeinrichtungen eine Spannungsquelle auf, die die beiden Heizeinrichtungen gemeinsam mit elektrischer Energie versorgt, so dass die vorhandenen Heizeinrichtungen stets den gleichen Betriebszustand aufweisen.

Aus der US 2016/0160725 A ist ein Leitungssystem für ein Abgasnachbehandlungssystem bekannt, welches ein flüssiges Reduktionsmittel vor einem SCR-Katalysatoren in den Abgasstrang einspritzt. Insbesondere wird dabei eine Medienleitung zum Leiten des Reduktionsmittels mittels eines T-förmigen oder Y-förmigen Verbinders derart geteilt, dass zwei Leitungsabschnitte zum Abgasstrang und ein Leitungsabschnitt zu einer Pumpe führt. Dabei sind die zwei Leitungsabschnitte, welche zum Abgasstrang führen, strömungstechnisch möglichst identisch konfiguriert, so dass die Verwendung einer gemeinsamen und auf beide Leitungsabschnitte gleich einwirkenden Heizeinrichtung ermöglicht wird.

Aus der DE 20 2007 018 089 U ist eine elektrisch beheizbare Medienleitung bekannt, welche insbesondere für die Leitung von gefrierenden Medien, z. B. wässrige Harnstofflösungen, geeignet ist. Eine hohe Prozesssicherheit wird dabei durch eine mit Kunststoff vergossene Baueinheit gewährleistet, welche aus einer Fluidleitung und mindestens einem endseitigen Fluidverbinder mit einem Heizmittel besteht.

Der vorliegenden Erfindung liegt die Aufgabe zu Grunde, das bekannte Leitungssystem derart zu verbessern, dass eine bedarfsgerechte Betriebsweise der Heizeinrichtungen der Medienleitungen möglich ist.

Diese Aufgabe wird durch das Leitungssystem gemäß den Merkmalen des Anspruchs 1 gelöst.

Durch die erfindungsgemäße Heizeinrichtung können die Heizeinrichtungen jeder der vorhandenen Medienleitungen unabhängig voneinander mit elektrischer Energie von der vorhandenen Spannungsquelle versorgt werden, oder aber gleichzeitig oder auch zeitlich überlappend. Somit können die Heizeinrichtungen bedarfsgerecht zum Beispiel in Abhängigkeit von der vorhandenen Temperatur im Abgasstrang des Kraftfahrzeuges und/oder von der Umgebungstemperatur angesteuert werden. Zudem ist eine Berücksichtigung der Leitungslänge, der thermischen Masse, d. h. des Volumens des Reduktionsmittels möglich. Die erfindungsgemäße Steuereinrichtung ermöglicht zudem eine Optimierung des Einschaltstromes sowie der gesamten Leistungsaufnahme der Heizeinrichtungen.

Die vorliegende Erfindung ist insbesondere bei Leitungssystemen von Vorteil, bei denen zum Beispiel an zwei beabstandeten Stellen des Abgasstrangs eine Einspritzung des Reduktionsmittels, insbesondere einer Harnstofflösung, erfolgt. Bei einer derartigen Anwendung ermöglicht die Erfindung eine optimale Anpassung der Beheizung der an die jeweiligen Einspritzeinrichtungen (Injektoren) angeschlossenen Medienleitungen in Bezug auf die Einschaltdauer und den Einschalt- und Abschaltzeitpunkt.

Vorteilhafte Ausführungen der Erfindung sind in den Unteransprüchen enthalten. Anhand der in den Zeichnungen dargestellten Ausführungsbeispiele wird die Erfindung näher erläutert.

Es zeigen:
- Fig. 1: eine Prinzipansicht einer ersten Ausführungsform eines erfindungsgemäßen Leitungssystems,
- Fig. 2: eine Prinzipansicht einer zweiten Ausführungsform eines erfindungsgemäßen Leitungssystems,
- Fig. 3: ein Schaltplan für ein Leitungssystem gemäß Fig. 2,
- Fig. 4 bis Fig. 6: Prinzipansichten unterschiedlicher Ausführungsvarianten des Leitungssystems nach Fig. 2, und
- Fig. 7: eine Prinzipdarstellung eines Leitungsverbinders des Leitungssystems gemäß Fig. 2 und
- Fig. 8: Prinzipdarstellung der Heizstromverläufe bei einer PWM-Steuerung.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit Merkmalen eines anderen Ausführungsbeispiels von Bedeutung für den Gegenstand der Erfindung.

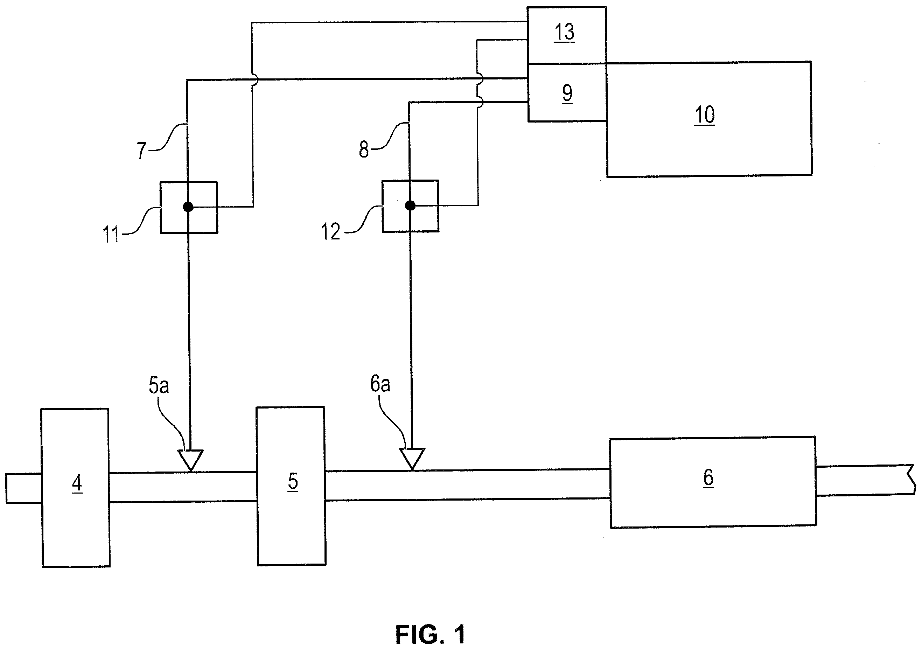

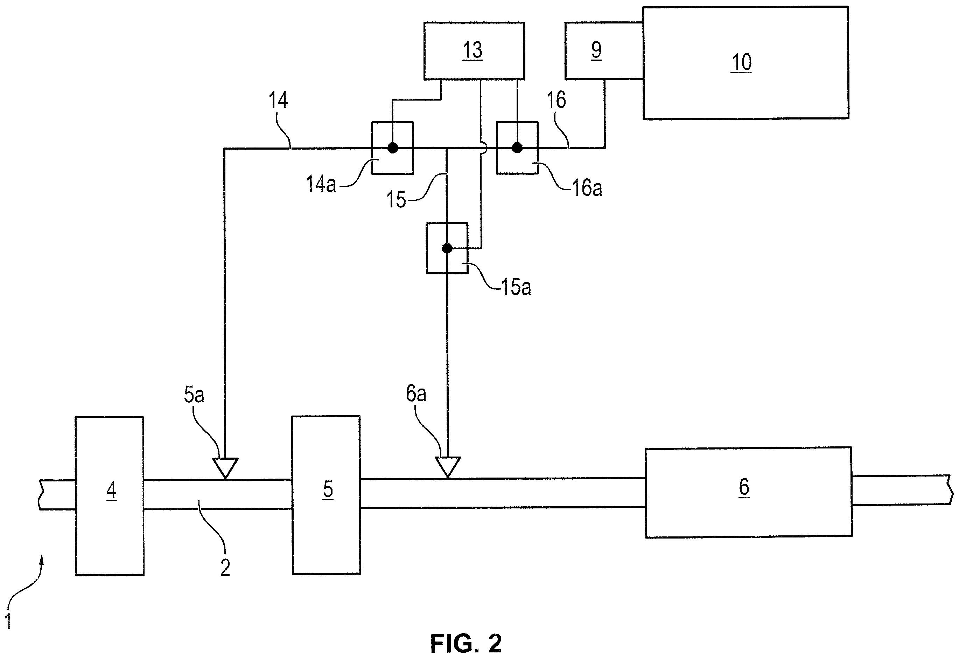

Wie in den Figuren 1 und 2 dargestellt ist, kann ein Abgasstrang 1 aus einer Abgasleitung 2 bestehen, die von einem Verbrennungsmotor 3 weggeführt ist und in der in Strömungsrichtung X des Abgases hintereinander ein Oxi-Katalysator 4, ein so genannter Stickoxidspeicher-Katalysator, auch LNT genannt, ein erster SCR-Katalysator 5 und ein zweiter SCR-Katalysator 6 hintereinander eingebaut sein können, wobei die Bezeichnung SCR für einen selektiven katalytischen Reduktionsvorgang steht. Im Bereich des ersten SCR-Katalysators 5 und im Bereich des zweiten SCR-Katalysators 6 wird jeweils in den vorhandenen Abgasstrom ein Reduktionsmittel, insbesondere eine Harnstofflösung, so genanntes Ad-Blue, über jeweils eine Dosiereinrichtung (ein so genannter Injektor) 5a und 6a eingespritzt. Hierbei ist der Injektor 5a dem Katalysator 5 und der Injektor 6a dem Katalysator 6 zugeordnet. Jeder der beiden Injektoren 5a, 6a ist über eine Medienleitung 7 bzw. eine Medienleitung 8 mit einer Pumpeinheit 9 an einem Tank 10 für das Reduktionsmittel angeschlossen. Jede der Medienleitungen 7, 8 ist jeweils mit einer eigenen Heizeinrichtung 11, 12 versehen, so dass mittels der Heizeinrichtungen 11, 12 eine Erwärmung des in den Medienleitungen 7, 8 vorhandenen Reduktionsmittels erfolgen kann. Die Heizeinrichtungen 11, 12 der Medienleitungen 7, 8 sind jeweils an eine Steuereinrichtung 13 angeschlossen, mit der die Heizeinrichtungen 11, 12 an eine elektrische Spannungsquelle zur Versorgung mit elektrischer Energie angeschlossen werden.

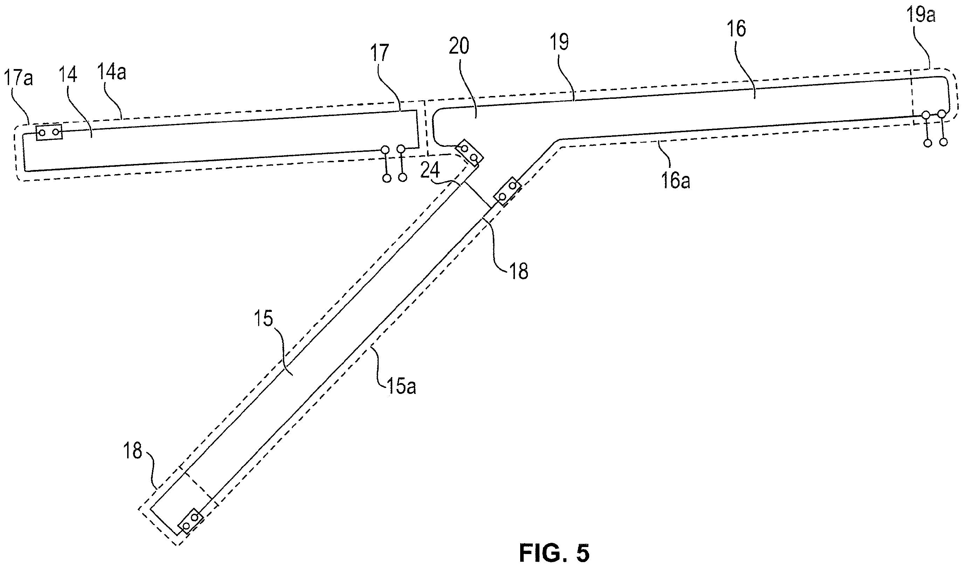

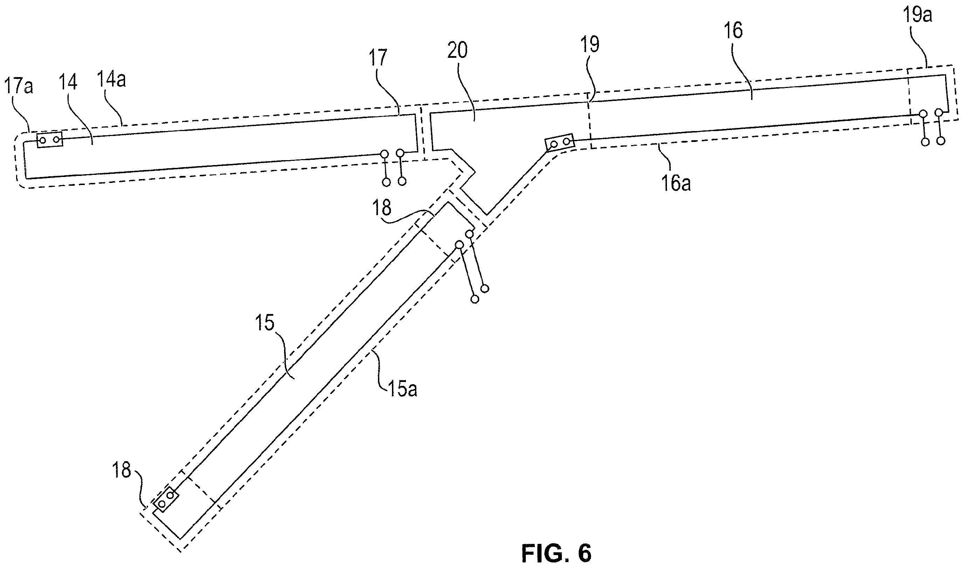

In Fig. 2 ist eine weitere Ausbildung eines erfindungsgemäßen Leitungssystems dargestellt, wobei funktionsmäßig gleiche Teile bzw. Vorrichtungen dieselben Bezugsziffern haben wie die Teile bzw. Vorrichtungen in Fig. 1. Im Unterschied zu der Ausführung zu Fig. 1 sind die Dosiereinrichtungen 5a, 6a über drei Medienleitungen 14, 15, 16 mit der Pumpeinheit 9 verbunden. Diese Ausbildung hat den Vorteil, dass hierdurch die Gesamtlänge der benötigten Medienleitungen verkürzt werden kann. Jede der drei Medienleitungen 14, 15, 16 weist wiederum eine eigene Heizeinrichtung 14a, 15a, 16a auf. Diese Heizeinrichtungen 14a, 15a, 16a sind jeweils mit der Steuereinrichtung 13 elektrisch verbunden und werden von dieser mit elektrischer Energie versorgt. Die Medienleitungen 14, 15, 16 sind mit einem Ende jeweils über den zugehörigen Anschlussabschnitt 17, 18, 19 an ein Verbinderstück 20 angeschlossen, siehe zum Beispiel Fig. 5 und 6, so dass sie untereinander fluidisch verbunden sind. Mit ihrem anderen Ende ist die Medienleitung 16 mittels eines Anschlussabschnitts 19a an die Pumpeinheit 9 und die Medienleitung 15 mit einem Anschlussabschnitt 18a an die Dosiereinrichtung 6a und die Medienleitung 14 mit einem Anschlussabschnitt 17a an die Dosiereinrichtung 5a angeschlossen.

Die Steuereinrichtung 13, siehe Fig. 1, 2 und 3, ist vorzugsweise derart ausgebildet, dass sie die Heizeinrichtungen 11, 12 bzw. 14a, 15a und 16a der zugehörigen Medienleitungen 7, 8 bzw. 14, 15, 16 derart ansteuern kann, dass folgende Betriebszustände vorliegen:
1. Alle Heizeinrichtungen 11, 12 bzw. 14a, 15a, 16a sind gleichzeitig in Betrieb,
2. Die Heizeinrichtungen 11, 12 bzw. 14a, 15a, 16a sind nicht gleichzeitig in Betrieb, wobei die Zeitdauer der Inbetriebnahme in Bezug auf jede der Heizeinrichtungen variabel sein kann, wobei zum Beispiel auch eine überlappende Inbetriebnahme der Heizeinrichtungen möglich ist.
3. Zwei der Heizeinrichtungen 14a, 15a, 16a sind gleichzeitig in Betrieb und die dritte Heizeinrichtung ist unabhängig hiervon hinsichtlich ihrer Inbetriebnahme und der Dauer ihres Betriebszustands.

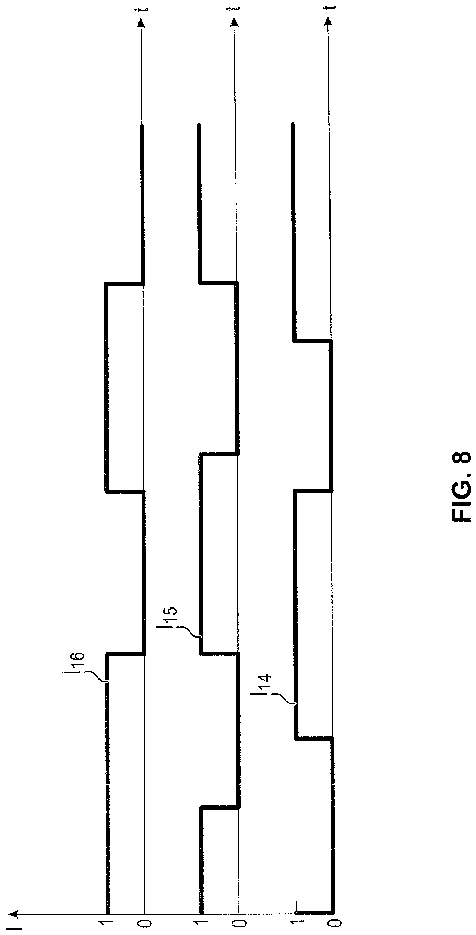

Die Steuerung der Betriebszustände 1, 2 und 3 erfolgt insbesondere mittels einer PWM-Steuerung (Pulse Width Modulation) der in den Heizeinrichtungen fließenden Heizströme i₁₄, i₁₅, i₁₆, siehe Fig. 8.

Weiterhin kann mittels der Steuereinrichtung 13 auch die Höhe der jeweils wirksamen elektrischen Ströme, d. h. deren Stromstärke, gesteuert werden, so dass eine gleich große oder auch unterschiedliche Heizwirkung in den einzelnen Medienleitungen 7, 8 bzw. 14, 15, 16 erzielt werden kann. Dies ist insbesondere dann von Vorteil, wenn eine unterschiedliche Erwärmung in den jeweiligen Medienleitungen, zum Beispiel aufgrund unterschiedlicher Durchflussmengen des Reduktionsmittels, wünschenswert ist.

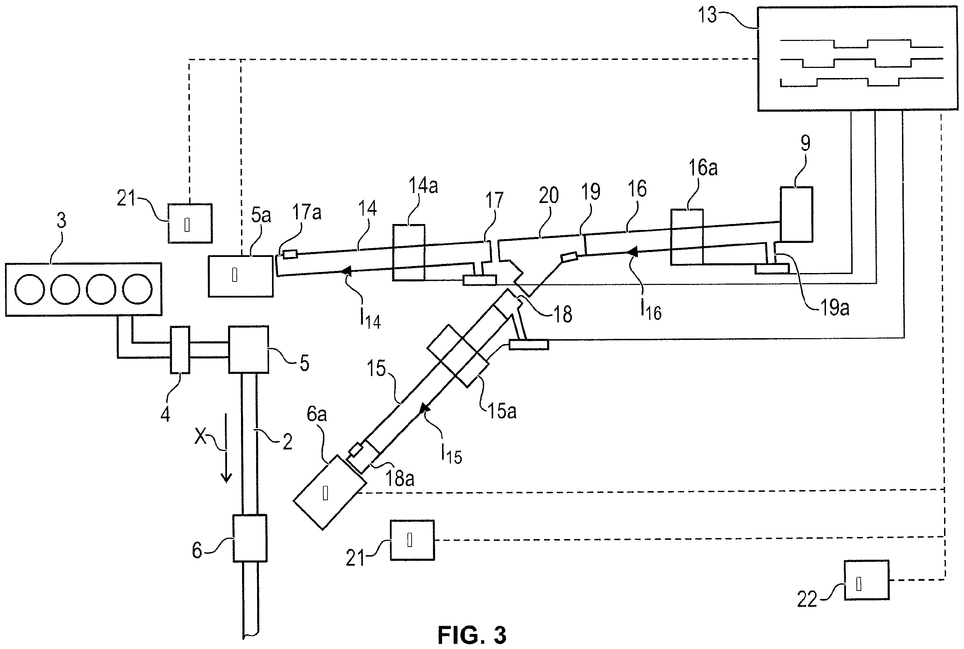

Wie in Fig. 3 gezeigt, ist es zweckmäßig, wenn Temperaturfühler 21 zumindest im Bereich der Dosiereinrichtungen 5a, 6a für eine temperaturabhängige Steuerung vorhanden sind. Zudem kann zum Beispiel auch ein Temperaturfühler 22 vorhanden sein, um eine jeweils herrschende Außentemperatur zu messen und für eine temperaturabhängige Steuerung der Steuereinheit 13 mit zu berücksichtigen.

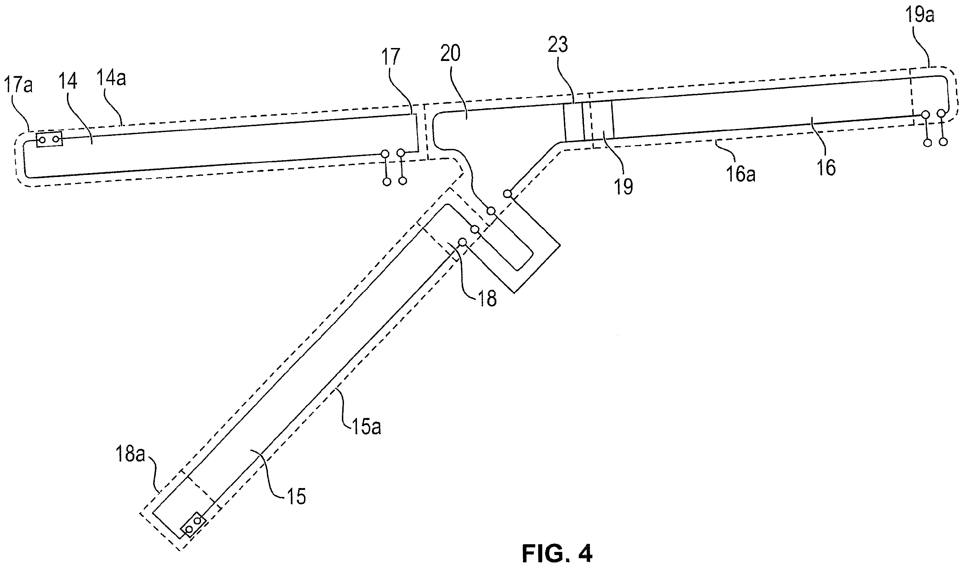

In Fig. 4 ist eine Verbindung von den drei Medienleitungen 14, 15, 16 derart dargestellt, dass die mit der Pumpeinheit 9 verbundene Medienleitung 16 mit dem Verbinderstück 20 zum Beispiel durch eine stoffschlüssige Verbindung, insbesondere durch eine Laserschweißung, im Bereich ihres Anschlussabschnitts 19 mit einem gegenüberliegenden Anschlussabschnitt 23 des Verbinderstücks 20 zum Beispiel fest verbunden ist, d. h. nur durch eine Zerstörung der Verbindung trennbar ist. Die beiden anderen Medienleitungen 14, 15 sind jeweils über eine lösbare Steckverbindung ihrer Anschlussabschnitte 17, 18 mit dem Verbinderstück 20 verbunden, so dass ein Lösen aus der Verbindungsstellung möglich ist. In diesem Ausführungsbeispiel ist die Heizeinrichtung 14a der Medienleitung 14, die zum Beispiel im Bereich des in Strömungsrichtung X ersten SCR-Katalysators 5 an dessen Dosiereinrichtung 5a angeschlossen ist, einzeln, d. h. unabhängig von den Heizeinrichtungen 15a, 16a der Medienleitungen 15, 16 mit der Steuereinrichtung 13 verbunden. Die Heizeinrichtungen 15a, 16a der Medienleitungen 15, 16 sind elektrisch in Reihe geschaltet, so dass sie an die Steuereinheit 13 gemeinsam angeschlossen sind und von dieser angesteuert werden, so dass die Versorgung mit elektrischer Energie für diese beiden Medienleitungen 15, 16 gemeinsam erfolgt.

Die Ausbildung gemäß Fig. 5 unterscheidet sich von der Ausbildung gemäß Fig. 4 dadurch, dass die Medienleitung 15, die zum Beispiel mit dem in Strömungsrichtung X zweiten SCR-Katalysator 6 über die Dosiereinrichtung 6a verbunden ist, mit dem Anschlussabschnitt 24 des Verbinderstücks 20 zum Beispiel ebenfalls fest verbunden ist, zum Beispiel durch eine Laserverschweißung.

In Fig. 6 ist eine Ausbildung dargestellt, bei der die Medienleitungen 14, 15, 16 mit dem Verbinderstück 20, wie in Fig. 4 dargestellt, verbunden sind. Jedoch ist gemäß Fig. 6 jede der Heizeinrichtungen 14a, 15a, 16a einzeln mit der Steuereinrichtung 13 verbunden, so dass jede der Heizeinrichtungen 14a, 15a und 16a der Medienleitungen 14, 15 und 16 einzeln unabhängig voneinander angesteuert wird und somit unabhängig voneinander mit elektrischer Energie durch Anschluss einer Spannungsquelle verbunden ist.

In Abweichung von der Verschaltung der elektrischen Heizeinrichtungen 14a, 15a und 16a gemäß den Figuren 4 und 5 sind die Heizeinrichtungen 14a, 15a, 16a der Medienleitungen 14, 15 und 16 mit der Steuereinrichtung 13 einzeln angesteuert und verbunden.

Es liegt ebenfalls im Rahmen der Erfindung, wenn die Heizeinrichtungen 14a, 15a, 16a der Medienleitungen 14, 15, 16, soweit eine Serienschaltung von zwei Heizeinrichtungen vorhanden ist, anstatt durch eine elektrische Serienschaltung durch eine elektrische Parallelschaltung miteinander elektrisch verbunden sind. So kann beispielsweise durch eine entsprechende Umschaltung mittels der Steuereinrichtung 13 eine Veränderung der durch die Heizeinrichtung fließenden Stromstärke erreicht werden.

Es ist von Vorteil, wenn die Anschlussabschnitte 17, 17a, 18, 18a, 19, 19a der Medienleitungen 14, 15, 16 jeweils ein elektrisches Heizelement aufweisen, das mit der elektrischen Heizeinrichtung 14a, 15a, 16a der Medienleitungen 14, 15, 16 zweckmäßigerweise elektrisch in Reihe geschaltet ist. Jedoch ist auch hier eine elektrische Parallelschaltung möglich. Zudem kann auch eine Weiterführung der Heizeinrichtung 14a, 15a, 16a der jeweiligen Medienleitung 14, 15, 16 auf die zugehörigen Anschlussabschnitte vorhanden sein.

Die Heizeinrichtungen 11, 12 bzw. 14a, 15a, 16a der Medienleitungen 7, 8 bzw.14, 15, 16 können aus einem oder zwei am Umfang der Medienleitung 14, 15, 16 spiralförmig gewickelten, elektrisch leitenden Heizdraht oder parallel zueinander spiralförmig gewickelten, elektrisch leitenden Heizdrähten bestehen. Das Heizelement der Anschlussabschnitte der Medienleitungen kann aus einem am Umfang des jeweiligen Anschlussabschnitts spiralförmig gewickelten, elektrisch leitenden Heizdraht gebildet sein. Die Heizeinrichtungen 11, 12 bzw. 14a, 15a, 16a können auch aus Leitungen aus elektrisch leitendem Kunststoff und/oder aus metallischen Heizlitzen oder metallischen Heizbändern gebildet werden.

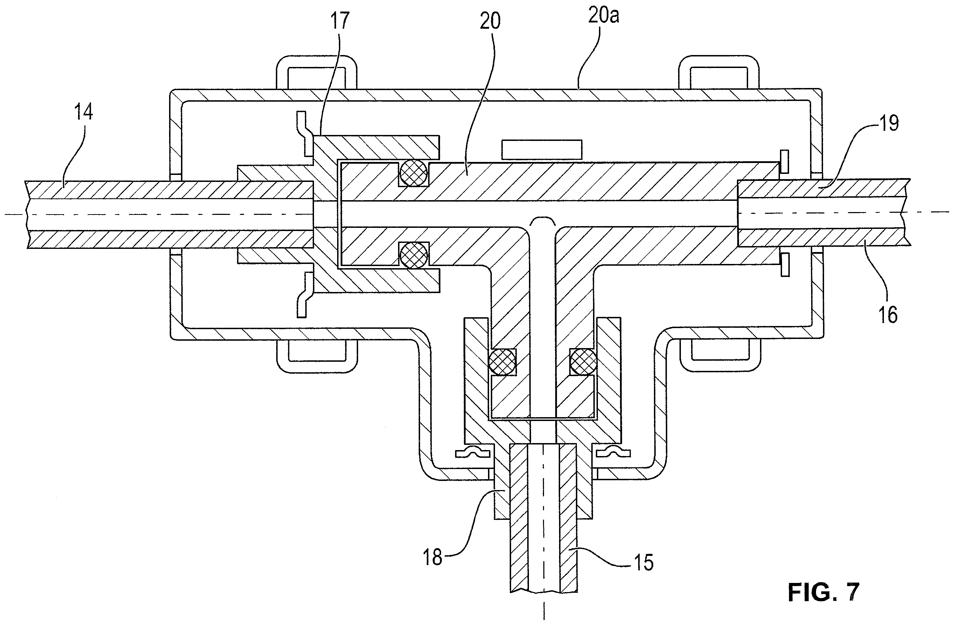

Wie in Fig. 7 dargestellt, kann das Verbinderstück 20 einschließlich der jeweiligen angeschlossenen Anschlussabschnitte der Medienleitungen 14, 15, 16 von einem Gehäuse 20a zum mechanischen Schutz und zur thermischen Isolierung umschlossen sein.

Aufgrund der vorliegenden Erfindung ist es möglich, das Leitungssystem in Bezug auf die Leitungslängen möglichst kompakt auszulegen. Hierbei können die Leitungs-Innendurchmesser der Medienleitungen 7, 8 bzw. 14, 15, 16 möglichst klein gewählt werden, wobei die Medienleitungen 7, 8 bzw. 14, 15, 16 jeweils einen einheitlichen Durchmesser aufweisen können. Je nach Auswahl der Dosiereinrichtung 5a, 6a und des jeweils vorhandenen, durch die Verbindung der Medienleitung untereinander vorhandenen Leitungspfades können vergleichbare hydraulische Bedingungen bereitgestellt werden. Der erfindungsgemäße mögliche selektive Betrieb der einzelnen Medienleitungen ermöglicht eine Beheizung der Medienleitungen in Abhängigkeit von dem in den Medienleitungen fließenden Medium. Zudem können transiente Zustände durch die selektive Beheizbarkeit der Medienleitung, beispielsweise in Form einer Prioritätsschaltung, ermöglicht werden. Zudem kann die thermische Masse bzw. die Menge des gefrierfähigen Mediums im Leitungssystem minimiert werden. Zudem kann die Steuerung und/oder Regelung der Heizströme in den Heizeinrichtungen auch insbesondere in Abhängigkeit von der Motortemperatur und der Abgastemperatur erfolgen.

### Bezugszeichenliste

- 1: Abgasstrang
- 2: Abgasleitung
- 3: Verbrennungsmotor
- 4: Oxi-Katalysator
- 5: Erster SCR-Katalysator
- 5a: Dosiereinrichtung
- 6: Zweiter SCR-Katalysator
- 6a: Dosiereinrichtung
- 7: Medienleitung
- 8: Medienleitung
- 9: Pumpeinheit
- 10: Tank
- 11: Heizeinrichtung
- 12: Heizeinrichtung
- 13: Steuereinrichtung
- 14: Medienleitung
- 14a: Heizeinrichtung
- 15: Medienleitung
- 15a: Heizeinrichtung
- 16: Medienleitung
- 16a: Heizeinrichtung
- 17: Anschlussabschnitt von 14
- 17a: Anschlussabschnitt
- 18: Anschlussabschnitt von 15
- 18a: Anschlussabschnitt
- 19: Anschlussabschnitt von 16
- 19a: Anschlussabschnitt
- 20: Verbindungsstück
- 20a: Gehäuse
- 21: Temperaturfühler innen
- 22: Temperaturfühler außen
- 23: Anschlussabschnitt von 20
- 24: Anschlussabschnitt von 20

- I₁₄: Heizströme
- I₁₅: Heizströme
- I₁₆: Heizströme

## Patentansprüche

1. Leitungssystem für eine Abgasbehandlung mittels einer Eindosierung eines fließfähigen Reduktionsmittels in einen Abgasstrang (1) eines Kraftfahrzeugs umfassend mindestens zwei Medienleitungen (7, 8, 14, 15) zum Transport des Reduktionsmittels, die jeweils an eine Dosiereinrichtung (5a, 6a) angeschlossen sind, wobei die Enden jeder Medienleitung (7, 8, 14, 15) jeweils einen Anschlussverbinder aufweisen,
**dadurch gekennzeichnet, dass** die Medienleitungen (7, 8, 14, 15) jeweils eine Heizeinrichtung (11, 12, 14a, 15a) zur Erwärmung des in der Medienleitung (7, 8, 14, 15) befindlichen Reduktionsmittels aufweisen, die Heizeinrichtung (11, 12, 14a, 15a)jeder Medienleitung (7, 8, 14, 15) mit einer Steuereinrichtung (13) derart verbunden ist, dass die Heizeinrichtungen (11, 12, 14a, 15a) der Medienleitungen (7, 8, 14, 15) mit einer Spannungsquelle jeweils getrennt voneinander, einzeln verbindbar sind, wobei die Steuereinrichtung (13) derart angesteuert wird, dass die Heizeinrichtungen (11, 12 oder 14a, 15a, 16a) der Schlauchleitungen (7, 8 oder 14, 15, 16) mindestens teilweise zeitversetzt mit der elektrischen Spannungsquelle verbunden sind.

2. Leitungssystem nach Anspruch 1,
**dadurch gekennzeichnet, dass** drei jeweils eine Heizeinrichtung (14a, 15a, 16a) aufweisende Medienleitungen (14, 15, 16) an einem gemeinsamen Verbinderstück (20) mit einem ihrer Anschlussverbinder zur Weiterleitung des Reduktionsmittels fluidisch an unterschiedlichen Anschlussabschnitten (23, 24) des Verbinderstücks (20) angeschlossen sind.

3. Leitungssystem nach Anspruch 2,
**dadurch gekennzeichnet, dass** mindestens eine der Medienleitungen (14, 15, 16) mit dem Verbinderstück (20) an dessen Anschlussabschnitt (23, 24) über eine Steckverbindung stoffschlüssig, insbesondere mittels einer Laserschweißung, verbunden ist.

4. Leitungssystem nach Anspruch 3,
**dadurch gekennzeichnet, dass** die beiden anderen Medienleitungen (14, 15, 16) über eine lösbare Steckverbindung mit dem Verbinderstück (20) an dessen Anschlussabschnitten (23, 24) verbunden sind.

5. Leitungssystem nach Anspruch 3 oder 4,
**dadurch gekennzeichnet, dass** zwei Medienleitungen (14, 15) mit dem Verbinderstück (20) stoffschlüssig und die dritte Medienleitung (16) mit dem Verbinderstück (20) lösbar steckbar verbunden ist.

6. Leitungssystem nach einem der Ansprüche 3 bis 5,
**dadurch gekennzeichnet, dass** die Heizeinrichtung (14a, 15a) der stoffschlüssig verbundenen Medienleitung (14, 15) mit der Heizeinrichtung (16a) einer der lösbar verbundenen Medienleitungen (16) elektrisch in Reihe oder elektrisch parallel geschaltet ist.

7. Leitungssystem nach einem der Ansprüche 3 bis 5,
**dadurch gekennzeichnet, dass** die Heizeinrichtungen (16a) der mit dem Verbinderstück (20) lösbar verbundenen Medienleitungen (16) miteinander elektrisch in Reihe oder elektrisch parallel geschaltet sind.

8. Leitungssystem nach einem der Ansprüche 3 bis 7,
**dadurch gekennzeichnet, dass** die Heizeinrichtungen (14a, 15a, 16a) der jeweils lösbar und der jeweils stoffschlüssig mit dem Verbinderstück (20) verbundenen Medienleitungen (14, 15, 16) jeweils voneinander unabhängig mit der Steuereinrichtung (13) elektrisch verbunden sind.

9. Leitungssystem nach einem der Ansprüche 1 bis 8,
**dadurch gekennzeichnet, dass** die Anschlussverbinder der Medienleitungen (14, 15, 16) ein elektrisches Heizelement aufweisen, das mit der Heizeinrichtung (14a, 15a, 16a) der Medienleitung (14, 15, 16) elektrisch in Reihe oder parallel geschaltet ist oder als eine Weiterführung der Heizeinrichtung (14a, 15a, 16a) der Medienleitung (14, 15, 16) ausgebildet ist.

10. Leitungssystem nach einem der Ansprüche 1 bis 9,
**dadurch gekennzeichnet, dass** die Heizeinrichtungen (14a, 15a, 16a) der Medienleitungen (14, 15, 16) aus einem oder mindestens zwei am Umfang der Medienleitung (14, 15, 16) spiralförmig gewickelten, elektrisch leitenden Heizdraht oder Heizdrähten bestehen, die insbesondere spiralförmig umfangsgemäß gewickelt sind.

11. Leitungssystem nach Anspruch 10,
**dadurch gekennzeichnet, dass** die Heizelemente der Anschlussverbinder aus einem am Umfang der Anschlussverbinder spiralförmig gewickelten elektrischen Heizdraht bestehen.

12. Verfahren zur Steuerung des Leitungssystems nach einem der Ansprüche 1 bis 11,
**dadurch gekennzeichnet, dass** die Steuereinrichtung (13) derart gesteuert wird, dass die Heizeinrichtungen (11, 12 oder 14a, 15a, 16a) der Schlauchleitungen (7, 8 oder 14, 15, 16) mindestens teilweise zeitversetzt mit einer elektrischen Spannungsquelle verbunden werden.

13. Verfahren zur Steuerung des Leitungssystems nach einem der Ansprüche 2 bis 11,
**dadurch gekennzeichnet, dass** die Steuereinrichtung (13) mittels eines PWM-Verfahrens Heizströme (i₁₄, i₁₅, i₁₆) in den Heizeinrichtungen (14a, 15a, 16a) derart taktet, dass jeweils maximal zwei der Heizeinrichtungen (14a, 15a, 16a) gleichzeitig von einem Heizstrom (i₁₄, i₁₅, i₁₆) durchflossen werden.

14. Verfahren nach Anspruch 12 oder 13,
**dadurch gekennzeichnet, dass** die Steuerung der Steuereinrichtung (13) in Abhängigkeit von dem in den Medienleitungen (14, 15, 16) fließenden Reduktionsmittel und/oder temperaturabhängig, insbesondere in Abhängigkeit von der Motortemperatur und/oder der Motorabgastemperatur erfolgt.

## Claims

1. Line system for exhaust gas treatment by means of metering a flowable reducing agent into an exhaust tract (1) of a motor vehicle, comprising at least two media lines (7, 8, 14, 15) for transporting the reducing agent, which are each connected to a metering device (5a, 6a), the ends of each media line (7, 8, 14, 15) each having a connection connector,
**characterized in that** the media lines (7, 8, 14, 15) each have a heating device (11, 12, 14a, 15a) for heating the reducing agent located in the media line (7, 8, 14, 15), the heating device (11, 12, 14a, 15a) of each media line (7, 8, 14, 15) is connected to a control device (13) in such a way that the heating devices (11, 12, 14a, 15a) of the media lines (7, 8, 14, 15) can be connected to a voltage source, in each case separately from one another, individually, the control device (13) being activated in such a way that the heating devices (11, 12 or 14a, 15a, 16a) of the hose lines (7, 8 or 14, 15, 16) are connected to the electrical voltage source at least partially with a time delay.

2. Line system according to claim 1,
**characterized in that** three media lines (14, 15, 16) each having a heating device (14a, 15a, 16a) are fluidically connected to a common connector piece (20) with one of their connection connectors for passing on the reducing agent at different connection sections (23, 24) of the connector piece (20).

3. Line system according to claim 2,
**characterized in that** at least one of the media lines (14, 15, 16) is connected to the connector piece (20) at its connection section (23, 24) by means of a plug-in connection, in particular by means of laser welding.

4. Line system according to claim 3,
**characterized in that the** two other media lines (14, 15, 16) are connected to the connector piece (20) at its connection sections (23, 24) via a detachable plug-in connection.

5. Line system according to claim 3 or 4,
**characterized in that** two media lines (14, 15) are connected to the connector piece (20) in a materially locking manner and the third media line (16) is connected to the connector piece (20) in a detachable plug-in manner.

6. Line system according to any one of claims 3 to 5,
**characterized in that** the heating device (14a, 15a) of the materially connected media line (14, 15) is electrically connected in series or electrically in parallel with the heating device (16a) of one of the detachably connected media lines (16).

7. Line system according to any one of claims 3 to 5,
**characterized in that** the heating devices (16a) of the media lines (16) detachably connected to the connector piece (20) are electrically connected to each other in series or electrically connected in parallel.

8. Line system according to any one of claims 3 to 7,
**characterized in that** the heating devices (14a, 15a, 16a) of the media lines (14, 15, 16), which are each detachably connected to the connector piece (20), and of the media lines (14, 15, 16), which are each connected to the connector piece (20) in a materially locking manner, are each electrically connected to the control device (13) independently of one another.

9. Line system according to any one of claims 1 to 8,
**characterized in that** the connection connectors of the media lines (14, 15, 16) comprise an electrical heating element which is electrically connected in series or in parallel with the heating means (14a, 15a, 16a) of the media line (14, 15, 16) or is formed as a continuation of the heating means (14a, 15a, 16a) of the media line (14, 15, 16).

10. Line system according to any one of claims 1 to 9,
**characterized in that** the heating means (14a, 15a, 16a) of the media lines (14, 15, 16) consist of one or at least two electrically conductive heating wire or wires spirally wound around the circumference of the media line (14, 15, 16), in particular spirally circumferentially wound.

11. Line system according to claim 10,
**characterized in that the** heating elements of the connection connectors consist of an electric heating wire spirally wound around the circumference of the connection connectors.

12. A method of controlling the line system according to any one of claims 1 to 11, **characterized in that** the control device (13) is controlled in such a way that the heating devices (11, 12 or 14a, 15a, 16a) of the hose lines (7, 8 or 14, 15, 16) are connected to an electrical voltage source at least partially with a time delay.

13. A method of controlling the line system according to any one of claims 2 to 11, **characterized in that** the control device (13) uses a PWM method to clock heating currents (i₁₄, i₁₅ , i₁₆) in the heating devices (14a, 15a, 16a) in such a way that in each case at most two of the heating devices (14a, 15a, 16a) have a heating current (i₁₄ , i₁₅ , i₁₆ ) flowing through them simultaneously.

14. Method according to claim 12 or 13,
**characterized in that** the control device (13) is controlled as a function of the reducing agent flowing in the media lines (14, 15, 16) and/or as a function of temperature, in particular as a function of the engine temperature and/or the engine exhaust gas temperature.

## Revendications

1. Système de conduites pour un traitement des gaz d'échappement au moyen d'une introduction dosée d'un agent réducteur coulant dans un circuit de gaz d'échappement (1) d'un véhicule automobile, comprenant au moins deux conduites de fluide (7, 8, 14, 15) servant au transport de l'agent réducteur et qui sont raccordées respectivement à un dispositif de dosage (5a, 6a), dans lequel les extrémités de chaque conduite de fluide (7, 8, 14, 15) présentent respectivement un connecteur de raccordement,
**caractérisé en ce que** les conduites de fluide (7, 8, 14, 15) présentent respectivement un dispositif de chauffage (11, 12, 14a, 15a) servant à chauffer l'agent réducteur se trouvant dans la conduite de fluide (7, 8, 14, 15), le dispositif de chauffage (11, 12, 14a, 15a) de chaque conduite de fluide (7, 8, 14, 15) est relié à un dispositif de commande (13) de telle sorte que les dispositifs de chauffage (11, 12, 14a, 15a) des conduites de fluide (7, 8, 14, 15) peuvent être reliés individuellement à une source de tension, respectivement de manière séparée les uns des autres, dans lequel le dispositif de commande (13) est piloté de telle sorte que les dispositifs de chauffage (11, 12 ou 14a, 15a, 16a) des conduites en tuyau souple (7, 8 ou 14, 15, 16) sont reliés à la source de tension électrique au moins partiellement de manière différée.

2. Système de conduites selon la revendication 1, **caractérisé en ce que** trois conduites de fluide (14, 15, 16) présentant respectivement un dispositif de chauffage (14a, 15a, 16a) sont, au niveau d'une pièce de connexion commune (20), raccordées fluidiquement à différentes parties de raccordement (23, 24) de la pièce de connexion (20) par l'un de leurs connecteurs de raccordement pour transférer l'agent réducteur.

3. Système de conduites selon la revendication 2, **caractérisé en ce qu'**au moins l'une des conduites de fluide (14, 15, 16) est reliée à la pièce de connexion (20) au niveau de la partie de raccordement (23, 24) de celle-ci par liaison de matière, en particulier au moyen d'une soudure au laser, par l'intermédiaire d'une connexion enfichable.

4. Système de conduites selon la revendication 3, **caractérisé en ce que** les deux autres conduites de fluide (14, 15, 16) sont reliées à la pièce de connexion (20) au niveau des parties de raccordement (23, 24) de celle-ci par l'intermédiaire d'une connexion enfichable amovible.

5. Système de conduites selon la revendication 3 ou 4, **caractérisé en ce que** deux conduites de fluide (14, 15) sont reliées à la pièce de connexion (20) par liaison de matière, et la troisième conduite de fluide (16) est reliée à la pièce de connexion (20) de manière enfichable et amovible.

6. Système de conduites selon l'une quelconque des revendications 3 à 5, **caractérisé en ce que** le dispositif de chauffage (14a, 15a) de la conduite de fluide (14, 15) reliée par liaison de matière est connecté électriquement en série ou électriquement en parallèle au dispositif de chauffage (16a) d'une des conduites de fluide (16) reliées de manière amovible.

7. Système de conduites selon l'une quelconque des revendications 3 à 5, **caractérisé en ce que** les dispositifs de chauffage (16a) des conduites de fluide (16) reliées de manière amovible à la pièce de connexion (20) sont connectés les uns aux autres électriquement en série ou électriquement en parallèle.

8. Système de conduites selon l'une quelconque des revendications 3 à 7, **caractérisé en ce que** les dispositifs de chauffage (14a, 15a, 16a) des conduites de fluide (14, 15, 16) reliées à la pièce de connexion (20) respectivement de manière amovible et respectivement par liaison de matière sont reliés électriquement au dispositif de commande (13) respectivement indépendamment les uns des autres.

9. Système de conduites selon l'une quelconque des revendications 1 à 8, **caractérisé en ce que** les connecteurs de raccordement des conduites de fluide (14, 15, 16) présentent un élément de chauffage électrique qui est connecté électriquement en série ou en parallèle au dispositif de chauffage (14a, 15a, 16a) de la conduite de fluide (14, 15, 16) ou est réalisé comme un prolongement du dispositif de chauffage (14a, 15a, 16a) de la conduite de fluide (14, 15, 16).

10. Système de conduites selon l'une quelconque des revendications 1 à 9, **caractérisé en ce que** les dispositifs de chauffage (14a, 15a, 16a) des conduites de fluide (14, 15, 16) sont composés d'un filament chauffant ou d'au moins deux filaments chauffants électriquement conducteurs, enroulés en spirale sur la circonférence de la conduite de fluide (14, 15, 16), qui sont enroulés en particulier en spirale de manière circonférentielle.

11. Système de conduites selon la revendication 10, **caractérisé en ce que** les éléments de chauffage des connecteurs de raccordement sont composés d'un filament chauffant électrique enroulé en spirale sur la circonférence des connecteurs de raccordement.

12. Procédé de commande du système de conduites selon l'une quelconque des revendications 1 à 11, **caractérisé en ce que** le dispositif de commande (13) est commandé de telle sorte que les dispositifs de chauffage (11, 12 ou 14a, 15a, 16a) des conduites en tuyau souple (7, 8 ou 14, 15, 16) sont reliés à une source de tension électrique au moins partiellement de manière différée.

13. Procédé de commande du système de conduites selon l'une quelconque des revendications 2 à 11, **caractérisé en ce que** le dispositif de commande (13) synchronise au moyen d'un procédé PWM des courants de chauffage (i₁₄, i₁₅, i₁₆) dans les dispositifs de chauffage (14a, 15a, 16a) de telle sorte que respectivement au maximum deux des dispositifs de chauffage (14a, 15a, 16a) sont parcourus en même temps par un courant de chauffage (i₁₄, i₁₅, i₁₆).

14. Procédé selon la revendication 12 ou 13, **caractérisé en ce que** la commande du dispositif de commande (13) est effectuée en fonction de l'agent réducteur circulant dans les conduites de fluide (14, 15, 16) et/ou en fonction de la température, en particulier en fonction de la température du moteur et/ou de la température des gaz d'échappement du moteur.
